# EUROPÄISCHE PATENTSCHRIFT

(11) **EP 3 123 094 B1**
(45) Veröffentlichungstag und Bekanntmachung des Hinweises auf die Patenterteilung: **23.08.2017**
(21) Anmeldenummer: 16712331.4
(22) Anmeldetag: 29.03.2016
(51) Int. Cl.: F28D 20/00, F28D 20/02, F01K 3/00

(54) **ENERGIESPEICHER, KRAFTWERKSANLAGE MIT ENERGIESPEICHER UND VERFAHREN ZUM BETREIB DESSELBEN**
ENERGY STORE, POWER PLANT HAVING AN ENERGY STORE, AND METHOD FOR OPERATING THE ENERGY STORE
ACCUMULATEUR D'ÉNERGIE, CENTRALE ÉLECTRIQUE ÉQUIPÉE D'ACCUMULATEUR D'ÉNERGIE ET PROCÉDÉ POUR LES FAIRE FONCTIONNER

(30) Priorität: 30.03.2015 DE 102015104909
(43) Veröffentlichungstag der Anmeldung: 01.02.2017
(73) Patentinhaber: Naturspeicher GmbH, 89081 Ulm (DE)
(72) Erfinder: SCHECHNER, Alexander, 89075 Ulm (DE); IHLE, Gerhard, 89075 Ulm (DE); DEROI, Luis, 73453 Untergröningen (DE)
(74) Vertreter: Baudler, Ron
(86) Internationale Anmeldenummer: PCT/EP2016/056808
(87) Internationale Veröffentlichungsnummer: WO 2016/156321

(56) Entgegenhaltungen:
- DE-A1- 2 926 610
- DE-A1-102010 037 474
- DE-A1-102011 050 032

## Beschreibung

Die Erfindung betrifft einen Energiespeicher, eine Kraftwerksanlage mit einem derartigen Energiespeicher und ein Verfahren zum Betreib desselben.

Aufgrund der knapper werdenden Vorräte an fossilen Energieträgern ist die Nutzung regenerativer Energiequellen in den letzten Jahren stark ausgebaut worden. Eine Steigerung der Nutzung regenerativer Energiequellen wird auch für die nächsten Jahrzehnte vorausgesagt, da neben ansteigenden Rohstoffpreisen, die die Nutzung fossilen Energieträgern unwirtschaftlicher machen wird, auch die mit der Anreicherung der Atmosphäre mit Kohlendioxid verbundenen negativen Auswirkungen auf das Weltklima in der Energiepolitik Beachtung finden werden.

Aus dem allgemeinen Stand der Technik sind diverse regenerative Energiequellen bekannt, zu denen beispielsweise die Nutzung der Sonneneinstrahlung, der Windkraft oder von Biomasse gehört. Insbesondere die beiden erstgenannten Quellen sind jedoch mit dem bekannten Nachteil verbunden, dass die Nutzung von externen Faktoren wie vorhandener Sonneneinstrahlung oder vorhandenem Wind abhängt, die jedoch nicht mit dem tatsächlichen Energieverbrauch korreliert sind. Um hier Abhilfe zu schaffen, sind mehrere Möglichkeiten bekannt, Zum einen werden schnell zu schaltbare, üblicherweise auf fossilen Energieträgern basierende Kraftwerke bereit gehalten, die die entstehende Versorgungslücke kurzfristig ausgleichen können. zum anderen werden Anstrengungen unternommen, effiziente Energiespeicher zu schaffen, die Energie aus regenerativen Energiequellen elektrisch oder mechanisch zwischenspeichern und bei Bedarf in ein Stromnetz einleiten können.

In der DE 10 2011 050 032 A1 ist ein Beispiel für die mechanische Speicherung von Energie angegeben. Für die Stromgewinnung in Windkraftanlagen und Pumpspeicheranlagen wird die Kombination solcher Anlagen in der Weise vorgeschlagen, dass im Innenraum eines Turms einer oder mehrerer Windkraftanlagen ein Wasserspeicherbehälter eingerichtet wird, welcher als ein oberes Wasserreservoir der Pumpspeicheranlage dient.

Aus der DE 2 926 610 A1 ist ein Speicher zur Bereitstellung der Eingangswärme-Energie auf niederem Temperaturniveau für Wärmepumpen-Anlagen bekannt, die diese Energie aufnehmen und auf höherem Temperaturniveau wieder abgeben, wobei ein Wasserbecken so gestaltet ist, dass durch Wandschräge und entsprechende Oberfläche und Armierung sein Wasserinhalt ohne Beckenbeschädigung einfrieren kann und dass ein am Beckenboden befindliches oder in den Beckenboden eingelassenes Wärmetauschersystem erlaubt, die Abkühlungs- und Gefrierwärme dieses Beckens der Kaltseite einer Wärmepumpe zuzuführen.

Des Weiteren ist aus der DE 10 2010 037 474 A1 eine Speichertankeinrichtung für ein Energiespeichersystem bekannt, umfassend wenigstens einen Speichertank und wenigstens ein erstes Wärmeträgermedium, wobei der Speichertank ein Gehäuse aufweist, enthaltend ein Speichermedium und wenigstens eine erste Wärmetauscheranordnung in Kontakt mit dem Speichermedium, wobei die wenigstens erste Wärmetauscheranordnung ein erstes Wärmeträgermedium aufweist. Innerhalb des Gehäuses ist wenigstens eine zweite Wärmetauscheranordnung mit einem zweiten Wärmeträgermedium angeordnet, wobei das zweite Wärmeträgermedium im Wesentlichen gasförmig ist.

Es besteht somit in der Technik ein Bedarf an einem Energiespeicher, der auf einfache Weise eine regenerative Energieerzeugungsanlage bilden kann und der insbesondere auch ein Pumpspeicherkraftwerk ergänzen kann.

Es ist daher Aufgabe der Erfindung, einen Energiespeicher zu schaffen, der in Kombination mit regenerativen Energiequellen arbeiten kann und den Gesamtertrag einer derartigen Anlage verbessern kann.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Energiespeicher bereitgestellt, der einen Wärmetauscher aufweist, der auf einem vorzugsweise über eine erste Zuleitung mit Wasser befüllbarem, als See ausgebildetem Unterbecken schwimmend angeordnet ist, wobei über eine zweite Zuleitung Wasser aus dem Unterbecken und über eine dritte Zuleitung den Wärmetauscher durchdringendes Kühlmittel einer Wärmepumpe in getrennten Kreisläufen zuführbar ist, so dass Energie aus dem Unterbecken unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

Demnach wird der Energiespeicher auf der Oberfläche eines Sees bereitgestellt, der zum Beispiel als Unterbecken eines Pumpspeichers ausgeführt sein kann. Somit wird das Unterbecken mit einer zusätzlichen Möglichkeit der Energieentnahme versehen, die in Form von latenter Wärme genutzt wird. Durch Eisbildung im Unterbecken kann die latente Wärme genutzt werden und über den Wärmetauscher beispielsweise zum Beheizen von Gebäuden bei einem Verbraucher wieder abgegeben werden. Zusätzlich ist auch die im Wasser des Sees vorliegende sensible Wärme aus dem Unterbecken entnehmbar. Dazu ist der See vorzugsweise ohne natürlichen Zulauf und über eine erste Zuleitung mit Wasser befüllbar, so dass Sonneneinstrahlung eine Temperaturerhöhung des Wassers im See zur Folge hat. Die Energieentnahme erfolgt über eine Wärmepumpe, die vorzugsweise von einer regenerativen oder Kohlendioxid-neutralen Energiequelle mit elektrischer Energie gespeist wird. Insbesondere kann die Wärmepumpe auch von einem Generator des Pumpspeichers gespeist werden. Das Auftauen geschieht typischerweise aufgrund der vorherrschenden Umweltbedingungen, d.h. Sonneneinstrahlung oder Temperatur der Atmosphäre. In anderen Ausführungen kann es auch vorgesehen sein, das Auftauen des Eises durch das Nutzen der Kälte im Eis, z.B. zur Klimatisierung im Frühjahr oder Sommer, zu bewirken. Der eigentliche Wärmespeicher ist gemäß der Erfindung das Unterbecken. Die Eisbildung ist dabei eine Möglichkeit zur Nutzung der latenten Wärme aus dem als Unterbecken ausgebildeten Wärmespeicher.

Der Energiespeicher weist vielfältige Einsatzmöglichkeiten und Betriebsmodi auf, so dass je nach Umgebungstemperatur oder Sonneneinstrahlung, die die als sensible Wärme aus dem Unterbecken entnehmbare Energie beeinflussen, und je nach jahreszeitbedingtem oder prognostiziertem Energiebedarf bei einem Verbraucher der Energiespeicher entweder gefüllt oder geleert wird, wobei bei der Entnahme ausgewählt werden kann, ob sensible oder latente Wärme über die Wärmepumpe dem Verbraucher zugeführt werden soll. Durch Wahlmöglichkeit bei der Entnahme von Energie kann somit eine Anpassung an die Standort- und Bedarfsverhältnisse geschaffen werden.

Der Betrieb des Energiespeichers im jahreszeitlichen Zyklus erfolgt vorzugsweise so, dass während des Energieeintrags durch solare Einstrahlung, d.h. in nördlichen Breiten typischerweise von Frühjahr bis Herbst, eine Temperaturspreizung erfolgt. Dadurch wird die Abstrahlungsleistung der Oberfläche des Unterbeckens durch Kühlung des darin befindlichen Wasser reduziert. Die Temperaturspreizung zur Umgebungstemperatur liegt dabei ungefähr im Bereich von 5°C bis 10°C. Zum Ende des Herbsts, d.h. bei nachlassender Erwärmung durch solare Einstrahlung, beginnt eine Abkühlphase des Wassers im Unterbecken auf eine Temperatur von ca. 0,5°C, um eine eisbildungsfreie Übergangsphase zu ermöglichen. In der Winterzeit erfolgt die Energieentnahme durch Vereisung an der Oberfläche des Unterbeckens. Hierbei kann über ein genügend groß gewähltes Volumen des Eises aufgrund des hohen Energieinhalts für die Kristallisation von Wasser zu Eis eine kontinuierliche Wärmeerzeugung erreicht werden. In den Frühjahrsmonaten bis in den frühen Sommer schmilzt das Eis am Wärmetauscher bei gleichzeitig reduzierter Energieentnahme weiter ab und die Wassertemperatur erhöht sich durch solare Einstrahlung wieder. Ein wichtiger Punkt ist dabei, dass die nach der Vereisung gebildete Eisschicht bei bestimmten Witterungsbedingungen die Wasseroberfläche des Unterbeckens zur Atmosphäre hin isolieren kann, so dass dadurch deren Abstrahlungsleistung verringert wird.

Das vorstehend beschriebene Konzept kann somit auf vorteilhafte Weise für die Versorgung von Haushalten mit Wärmeenergie über Fernwärmeversorgung eingesetzt werden, wobei für etwa 2000 bis 4000 Haushalte etwa 40000 m³ Eis bereitgestellt werden muss, so dass ein naturnaher See als Unterbecken ausreichend dimensioniert wäre.

Gemäß einer Ausführungsform der Erfindung ist der Wärmetauscher durch von Kühlmittel durchströmbaren Rohren gebildet.

Das Bereitstellen des Wärmetauschers als Rohre hat gegenüber flächenhaften Elementen den Vorteil, dass die Lage des Kristallisationspunkts bei Beginn der Eisbildung über die Positionierung des Kaltwasserzulaufs wählen lässt. Demnach kann die beginnende Vereisung an die mechanischen Anforderungen des Wärmetauschers angepasst werden, um beispielsweise mechanische Spannungen im Vergleich zu unkontrollierter Vereisung zu vermeiden oder stark zu reduzieren.

Gemäß einer weiteren Ausführungsform der Erfindung sind die Rohre in Form einer Ringspirale angeordnet.

Eine Ringspirale kann in Form und Größe an die Uferlinie des als natürlicher See ausgebildeten Unterbeckens angepasst werden, um die Fläche des Unterbeckens gut ausnutzen zu können. Bei einem kreisförmigen oder nahezu kreisförmigen Unterbecken kann die Ringspirale von einer kreisförmigen Außenlinie begrenzt sein. Elliptische oder rechteckförmige Außenlinien sind aber ebenfalls möglich.

Gemäß einer weiteren Ausführungsform der Erfindung tragen radial angeordnete Streben die in Form der Ringspirale angeordneten Rohre.

Eine derartige Vorgehensweise ermöglicht eine stabile aber doch materialsparende Anordnung der Ringspirale des Wärmetauschers. Dies ist auch deshalb wichtig, da der Wärmetauscher auf der Wasseroberfläche schwimmend und beweglich angeordnet ist, so dass der Wärmetauscher bei Änderungen des Wasserstands sich ändernden Kräften ausgesetzt ist, wobei der Wärmetauscher beispielsweise auch Extremsituationen wie einer Überflutung bei Hochwasser standhalten soll.

Gemäß einer weiteren Ausführungsform der Erfindung ist der Wärmetauscher von einer Außenwand umgeben, die den Wärmetauscher entlang seines Außenumfangs in Form einer vertikalen Abtrennung umgibt, so dass ein ringförmiger Körper gebildet ist.

Um den Wärmetauscher mit dem darin gegebenenfalls vorhandenen Eis von dem Wasser des Unterbeckens abzutrennen, ist es gemäß der Erfindung nicht vorgesehen, ein abgeschlossenes Volumen zu bilden, wie dies bei bekannten auf Kristallisation von Wasser beruhenden Energiespeichern erfolgt. Es ist erfindungsgemäß durchaus vorteilhaft, die Oberseite und die Unterseite des Wärmetauschers unbedeckt zu belassen, wie weiter unten noch ausgeführt wird.

Gemäß einer weiteren Ausführungsform der Erfindung weist der ringförmige Körper einen Durchmesser von ungefähr 50 m bis 200 m, vorzugsweise ungefähr 100 m auf.

Die Dimensionierung gemäß diesem Ausführungsbeispiel ermöglicht die Bildung von mehreren zehntausend Kubikmeter Eis, das eine Versorgung von mehreren tausend Haushalten ermöglichen würde. Die in diesem Volumen an Eis gespeicherte Energie entspricht einer Wärmeleistung von einigen GWh. Die exakte Dimensionierung kann dabei unter Berücksichtigung der Randbedingungen wie Flächenbedarf, Energiebedarf und verfügbare elektrische Leistung zum Betrieb der Wärmepumpe entsprechend gewählt beziehungsweise angepasst werden.

Gemäß einer weiteren Ausführungsform der Erfindung ist der Wärmetauscher mittels einer Verankerung mit einem Grund des Unterbeckens verbindbar.

Hierbei wird bevorzugt in der Mitte des Wärmetauschers eine Befestigungsmöglichkeit entlang einer pfahlartigen, am Grund des Unterbeckens arretierten Verankerung geschaffen, wobei der Wärmetauscher in Abhängigkeit des Wasserstandes im Unterbecken an der Verankerung axial verschiebbar ist. Der Wärmetauscher kann zusätzlich zur oder anstelle der pfahlartigen Verankerung über geeignet vorgespannte Spannseile, die vorzugsweise an den oben erwähnten Speichen oder der Außenwand angebracht sind, am Grund des Unterbeckens oder im Bereich der Uferböschung gehalten werden. Die Vorspannung der Spannseile oder auch die Lage des Wärmetauschers an der pfahlartigen Verankerung können auch über eine externe Steuerung einstellbar sein.

Gemäß einer weiteren Ausführungsform der Erfindung bildet sich im Wärmetauscher eine Eisschicht radial von innen nach außen und gegebenenfalls anschließend in ihrer Dicke zunehmend aus.

Die Stabilität des schwimmenden Wärmetauschers wird durch das radiale Bilden von innen nach außen erhöht, so dass keine oder wenig aufwendige zusätzlichen Maßnahmen zur Ausbalancierung des Wärmetauschers während der Vereisung auf dem Unterbecken getroffen werden müssen. Dazu erfolgt die Zufuhr des Kältemediums aus der Wärmepumpe in der Mitte des Wärmetauschers. Demnach erfolgt zuerst die radiale Ausbildung der Eisschicht, um eine geschlossene Eisschicht zu erhalten. Anschließend wird die Dicke der Eisschicht oberhalb und unterhalb der Rohre des Wärmetauschers erhöht. Hierbei ist vorgesehen, die Eischicht etwa bis ca. 1 m auf jeder Seite der Rohre auszubilden. Die Eisschicht dient zum einen dazu, einen Kältespeicher für die Kühlung im Sommer bereitzustellen, um eine Kälteentnahme durchführen zu können. Wie bereits oben beschrieben, ist die Eisbildung aber auch eine Möglichkeit zur Wärmeentnahme aus dem Wasser des Unterbeckens.

Gemäß einer weiteren Ausführungsform der Erfindung weist der Wärmetauscher einen oberen Zulauf auf, über den Wasser bei Vereisung an dem Wärmetauscher auf die entstandene Eisschicht einbringbar ist, so dass sich die Eisschicht unterhalb der Wasseroberfläche des Unterbeckens befindet.

Diese Vorgehensweise ermöglicht es, bei vorhandener Eisschicht auf dieser eine zusätzliche Last zu schaffen, so dass der Wärmetauscher im Unterbecken absinkt und damit die Eisschicht unterhalb der Wasseroberfläche des Unterbeckens zu liegen kommt. Dadurch wird erreicht, dass trotz einer Eisschicht auch bei Sonneneinstrahlung die Wassertemperatur im Unterbecken nicht unnötig niedrig gehalten wird sondern vielmehr ansteigen kann, da die solare Einstrahlung im Bereich der Wasseroberfläche bei Erhöhung der Temperatur des oberflächennahen Wassers aufgenommen wird, so dass nur wenig Energieeintrag in die Eisschicht erfolgt.

Gemäß einer weiteren Ausführungsform der Erfindung ist zwischen der Eisschicht und dem zuführbaren Kaltwasser eine Isolierschicht angeordnet.

Dadurch erfolgt eine Abkopplung von der Eisschicht zur Umgebung, was insbesondere den Wärmeaustausch reduziert, so dass die Eisschicht länger erhalten bleibt.

Gemäß einer weiteren Ausführungsform der Erfindung ist unterhalb der Eisschicht und auf der der Wasseroberfläche abgewandten Seite der Eisschicht ein Luftpolster ausbildbar.

Dadurch erfolgt eine Abkopplung von der Eisschicht zum Wasser des Unterbeckens, was insbesondere den Wärmeaustausch reduziert, so dass die Eisschicht länger erhalten bleibt.

Gemäß einer weiteren Ausführungsform der Erfindung sind mehrere übereinanderliegende Eisschichten unabhängig voneinander ausbildbar.

Dadurch kann ein größeres Volumen der Eisschicht ausgebildet werden, wobei die einzelnen Eisschichten auch jeweils einzeln als Energieträger dienen und getrennt, je nach Bedarf bei den Verbrauchern für die Versorgung mit Fernwärme herangezogen werden können. Des Weiteren kann in einem mehrschichtigen System die oberste Schicht eine Art "Schnellvereisung" darstellen. Das heißt in der oberste Schicht kann schnell eine dünne Schicht Eis gebildet werden. Diese kann ca. bis 10 cm auf jeder Seite des Kühlrohres ausgebildet werden. Diese Schicht kann Leistungsspitzen abdecken aber auch herangezogen werden, das Unterbecken zur Atmosphäre hin zu isolieren. Die Idee ist, dass bei der Schnellvereisung z.B. über Nacht eine Eisschicht gebildet wird, um das Unterbecken gegen die Atmosphäre zu isolieren, während am Tag Wasser über das Eis gepumpt wird, um die Sonneneinstrahlung zu absorbieren und die dünne Eisschicht aufzuschmelzen. Die Schnellvereisung soll also bei positiver Energiebilanz (z.B. bei Tag) als Sonnenkollektor dienen und bei negativer Energiebilanz (z.B. kalte Nacht) als Isolation. Dadurch kann man bei Tag schnell "warmes" Wasser am Kollektor und somit eine hohe Effizienz an der Wärmepumpe erhalten. Bei Nacht wird durch die Isolation wenig Energie an die Atmosphäre verloren gehen.

Gemäß einer weiteren Ausführungsform der Erfindung unmittelbar benachbarte Eisschichten durch Isolierschichten getrennt sind.

Dadurch erfolgt eine Abkopplung von der Eisschicht zur Umgebung, was insbesondere den Wärmeaustausch reduziert, so dass die Eisschicht länger erhalten bleibt.

Außerdem wird eine Kraftwerksanlage umfassend ein mit Wasser befüllbares Unterbecken eines Pumpspeicherkraftwerks angegeben, wobei das Unterbecken über eine erste Zuleitung mit einer Pumpe und über eine durch das Pumpspeicherkraftwerk hindurchführende und mit der ersten Zuleitung verbindbaren Leitung mit einem oberen Reservoir verbunden ist, wobei das Unterbecken mit einem oben beschriebenen Energiespeicher versehen ist.

Diese Vorgehensweise sorgt für eine deutlich verbesserte Energiebilanz, da zusätzlich zu der Speicherung im Pumpspeicherwerk auch noch eine Energiespeicherung in dem ohnehin schon für das Pumpspeicherwerk vorhandenen Unterbeckens vorgenommen wird. Die benötigte Leistung des Energiespeichers erfolgt dabei über das Pumpspeicherwerk.

Gemäß einer Ausführungsform ist das obere Reservoir Teil einer Windkraftanlage, wobei die Pumpe mittels von der Windkraftanlage erzeugter elektrischer Energie antreibbar ist, um Wasser aus dem Unterbecken in das obere Reservoir zu pumpen.

Insbesondere die wechselnde Leistung der Windkraftanlage aufgrund sich ändernden Windbedingungen kann über das Pumpspeicherwerk zu einem gewissen Grad kompensiert werden, so dass das Pumpspeicherwerk in windarmen Zeiten Leistung abgeben kann und bei überschüssiger Leistung der Windkraftanlage Energie speichern kann.

Diese Vorgehensweise sorgt für eine deutlich verbesserte Energiebilanz, da zusätzlich zu der Speicherung der wechselnden Leistung der Windkraftanlage im Pumpspeicherwerk auch noch eine Energiespeicherung in dem ohnehin schon für das Pumpspeicherwerk vorhandenen Unterbeckens vorgenommen wird. Die benötigte Leistung des Energiespeichers erfolgt dabei über das Pumpspeicherwerk.

Schließlich wird ein Verfahren zum Betrieb eines derartigen Energiespeichers angegeben, bei dem die Wärmepumpe in Abhängigkeit der Umgebungstemperatur, der Sonneneinstrahlung und der Wassertemperatur so gesteuert wird, dass die Eisschicht am Wärmetauscher dann gebildet wird, wenn aus der Wassertemperatur des Unterbeckens keine Energie gewinnbar ist.

Gemäß einer Ausführungsform des Verfahrens ist darüber hinaus ein Absenken der Eisschicht durch Wasserlast durchführbar, um die Eisschicht vor Sonneneinstrahlung zu schützen.

Durch die Steuerung der Wasserlast über die obere Zuleitung kann die Wirkung solarer Einstrahlung auf die Eisschicht reduziert werden. Dadurch kann die solare Einstrahlung über das Wasser absorbiert werden, da Eis größtenteils die solare Strahlung reflektieren würde. Dadurch erhöht sich die eingestrahlte Energiemenge in das Unterbecken im Vergleich zu einer Situation mit darauf schwimmender Eisschicht erheblich.

Gemäß einer weiteren Ausführungsform des Verfahrens kann der Energiespeicher einen mehrschichtigen Aufbau aufweisen, wobei die der Wasseroberfläche nächstliegende Schicht zuerst zur Bildung einer vorzugsweise dünnen Eisschicht herangezogen wird.

Demnach kann in einem mehrschichtigen System die oberste Schicht eine Art "Schnellvereisung" darstellen. Das heißt in der oberste Schicht kann schnell eine dünne Schicht Eis gebildet werden. Diese kann ca. bis 10 cm auf jeder Seite des Kühlrohres ausgebildet werden. Diese Schicht kann Leistungsspitzen abdecken aber auch herangezogen werden, das Unterbecken zur Atmosphäre hin zu isolieren. Die Idee ist, dass bei der Schnellvereisung z.B. über Nacht eine Eisschicht gebildet wird, um das Unterbecken gegen die Atmosphäre zu isolieren, während am Tag Wasser über das Eis gepumpt wird, um die Sonneneinstrahlung zu absorbieren und die dünne Eisschicht aufzuschmelzen. Die Schnellvereisung soll also bei positiver Energiebilanz (z.B. bei Tag) als Sonnenkollektor dienen und bei negativer Energiebilanz (z.B. kalte Nacht) als Isolation. Dadurch kann man bei Tag schnell "warmes" Wasser am Kollektor und somit eine hohe Effizienz an der Wärmepumpe erhalten. Bei Nacht wird durch die Isolation wenig Energie an die Atmosphäre verloren gehen.

Nachfolgend werden einige Ausführungsbeispiele anhand der Zeichnungen näher erläutert. Es zeigen:
- **Fig. 1**: eine schematische Darstellung einer erfindungsgemäßen Kraftwerksanlage zur Realsierung der Erfindung,
- **Fig. 2**: ein erfindungsgemäßer Energiespeicher in einer schematischen Darstellung,
- **Fig. 3**: ein Wärmetauscher als Bestandteil eines erfindungsgemäßen Energiespeichers Halbzeug in einer perspektivischen Seitenansicht,
- **Fig. 4**: der Wärmetauscher der Ausführungsform gemäß Fig. 3 in einer Seitenansicht,
- **Fig. 5**: der Wärmetauscher der Ausführungsform gemäß Fig. 3 in einer weiteren Seitenansicht,
- **Fig. 6**: der Wärmetauscher der Ausführungsform gemäß Fig. 3 in einer weiteren Seitenansicht, und
- **Fig. 7**: der Wärmetauscher der Ausführungsform gemäß Fig. 3 in einer weiteren Seitenansicht.

In den Figuren sind gleiche oder funktional gleich wirkende Bauteile mit dem gleichen Bezugszeichen versehen.

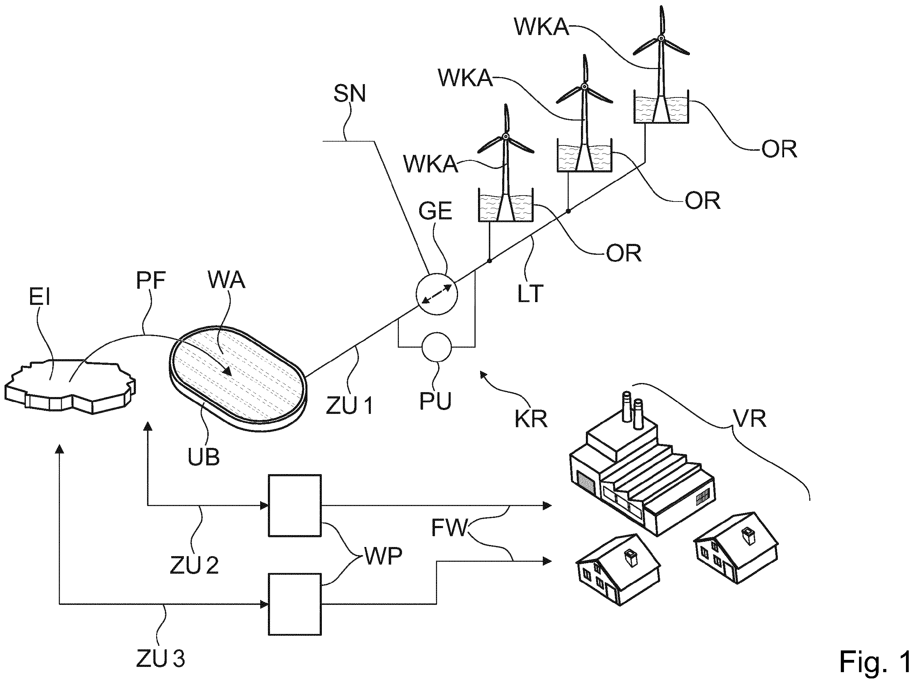

In Fig. 1 wird nachfolgend eine erste Ausführungsform der Erfindung gezeigt. In Fig. 1 ist schematisch eine Kraftwerksanlage dargestellt, die eine oder mehrere Windkraftanlagen WKA umfasst. Die Windkraftanlagen WKA sind auf einem Bergkamm beispielsweise über einem Flusstal oder dergleichen angeordnet. Unterhalb der Windkraftanlagen WKA befindet sich ein Pumpspeicherkraftwerk KR, wobei das Pumpspeicherkraftwerk KR über eine Leitung LT mit einem oberen Reservoir OR der Windkraftanlagen WKA verbunden ist. Das obere Reservoir kann beispielsweise als Becken ausgebildet sein, in dem die einzelnen Windkraftanlagen angeordnet sind, so dass das obere Reservoir OR ein Fundament der Windkraftanlage WKA bildet. In anderen Ausführungsformen kann das obere Reservoir OR in einem Mast der Windkraftanlage WKA integriert sein oder als separater Speicher benachbart zur Windkraftanlage WKA ausgeführt sein.

Desweiteren weist das Pumpspeicherkraftwerk KR einen mit der Leitung LT verbundenen Generator GE auf, der so ausgebildet ist, dass Wasser, das von dem oberen Reservoir OR über die Leitung LT durch den Generator GE in ein Unterbecken UB geführt wird, in elektrische Leistung gewandelt werden kann. In die entgegengesetzte Richtung kann Wasser aus dem Unterbecken UG über eine erste Zuleitung ZU1 und einer Pumpe PU in das obere Reservoir gepumpt werden. Der Generator GE ist mit einem Stromnetz SN verbunden, so dass die erzeugte elektrische Energie eingespeist werden kann.

Desweiteren weist das Pumpspeicherkraftwerk KR im Unterbecken UB eine Eisschicht EI auf, die, wie nachfolgend noch genauer erläutert werden wird, auf der Oberfläche des mit Wasser WA gefüllten Unterbecken UB angeordnet ist, wie in Fig. 1 durch den Pfeil PF angedeutet ist. Das mit Wasser WA gefüllte Unterbecken UB ist über eine zweite Zuleitung ZU2 mit einer Wärmepumpe WP verbunden.

In anderen Ausführungen kann das Unterbecken UB auch ohne ein Pumpspeicherkraftwerk KR realisiert sein, d.h. beispielsweise als See oder allgemein als Oberflächengewässer ausgebildet sein.

Ein Kühlmittel zur Bildung der Eisschicht EI ist über eine dritte Zuleitung ZU3 ebenfalls über die Wärmepumpe WP einem in dem Unterbecken UB angeordneten Wärmetauscher WTA zuführbar. Die Wärmepumpe WP erzeugt durch die Entnahme von sensibler Wärme aus dem Wasser WA des Unterbeckens UB oder durch die Entnahme von latenter Wärme aus der Eisschicht EI im Unterbecken UB Wärme, die in Form von Fernwärme FW einer Vielzahl von Verbrauchern VR zugeführt werden kann.

Die Wärmepumpe WP benötigt elektrische Leistung, die beispielsweise vom Generator GE bereit gestellt werden kann. Die Wärmepumpe WP befindet sich dabei bevorzugt innerhalb des Pumpspeicherkraftwerks KR oder ist unmittelbar benachbart zu diesem angeordnet. Die Pumpe PU wird vorteilhaft über die von den Windkraftanlagen WKA abgegebene elektrische Leistung versorgt.

Das Unterbecken UB bildet zusammen mit der Eisschicht EI sowie dem im Unterbecken UB vorhandenen Wasser WA zusammen mit der Wärmepumpe WP einen Energiespeicher EN.

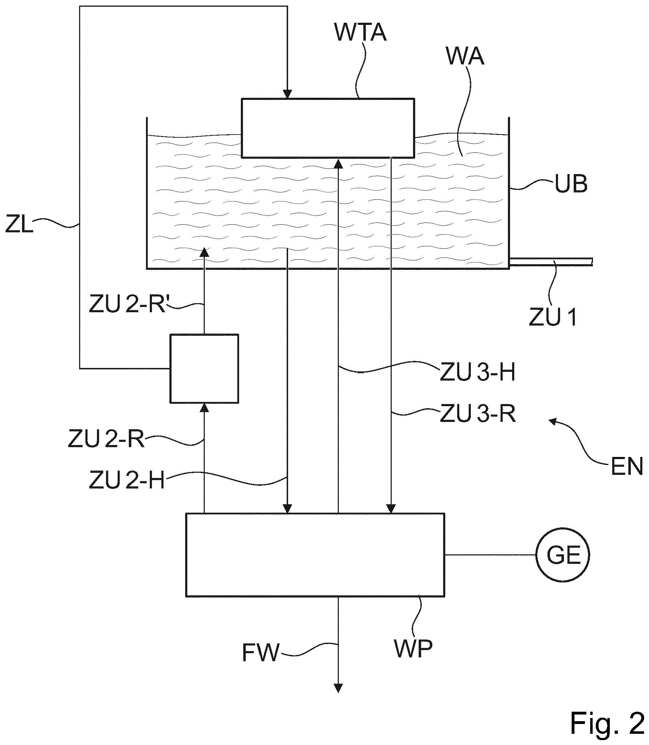

In Fig. 2 ist schematisch der Energiespeicher EN gezeigt, wobei gemäß Fig. 2 insbesondere die einzelnen Flüssigkeitsströme zwischen den verschiedenen Komponenten näher dargestellt sind.

Das Unterbecken UB bildet über die erste Zuleitung ZU1 einen Bestandteil des Pumpspeicherkraftwerks KR. Über die erste Zuleitung ZU1 kann somit Wasser WA dem Unterbecken UB zugeführt werden bzw. dem Unterbecken UB entnommen werden, um über die Pumpe PU in das obere Reservoir OR geleitet zu werden. Desweiteren wird Wasser WA des Unterbeckens UB über die zweite Zuleitung ZU2 der Wärmepumpe WP zugeführt. Die Zuführung ist in Fig. 2 als ZU2-H gekennzeichnet. Die Rückleitung, die das im Unterbecken UB enthaltene Wasser WA üblicherweise nach dem Durchströmen der Wärmepumpe WP abgekühlt verlässt, ist in Fig. 2 mit dem Bezugszeichen ZO2-R gekennzeichnet. Das abgekühlte Wasser kann zum einen über die Zuleitung ZU2-R' wieder ins Unterbecken UB gelangen. Desweiteren ist es möglich, das abgekühlte Wasser über die obere Zuleitung ZL dem Wärmetauscher WTA zuzuführen.

In einem getrennt arbeitenden Kreislauf der Wärmepumpe WP wird über die dritte Zuleitung ZU3 Kühlflüssigkeit dem Wärmetauscher WTA zugeführt. Die Kühlflüssigkeit gelangt dabei über die mit dem Bezugszeichen ZU3-H gekennzeichnete Leitung in den Wärmetauscher WTA, die Rückleitung ist in Fig. 2 mit dem Bezugszeichen ZU3-R angedeutet. Wie bereits erwähnt, wird die Wärmepumpe WP vorteilhaft über den Generator GE mit elektrischer Leistung versorgt. Die Wärmepumpe WP gibt Fernwärme FW an die Verbraucher VR ab, wie im Zusammenhang mit Fig. 1 erläutert wurde.

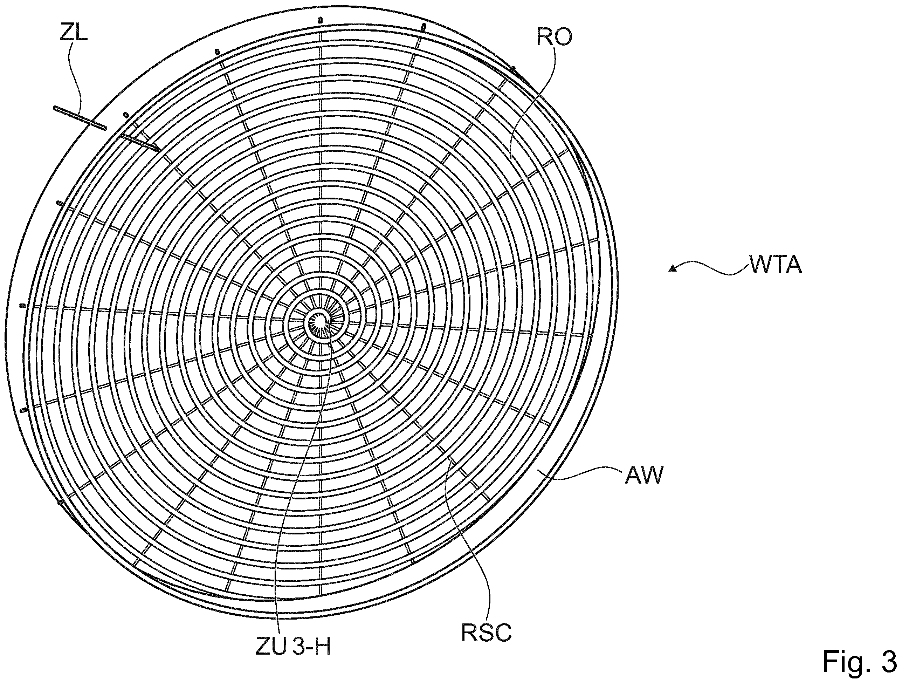

Nachfolgend wird eine mögliche Ausführungsform des Wärmetauschers WTA unter Bezugnahme auf Fig. 3 beschrieben. Der Wärmetauscher WTA ist auf dem mit Wasser WA gefüllten Unterbecken UB schwimmend angeordnet und umfasst Rohre RO, die in Form einer Ringspirale angeordnet sind. Nach außen hin wird der Wärmetauscher WTA durch eine Außenwand AW begrenzt, die den Wärmetauscher WTA entlang seines Außenumfangs umgibt. Die Rohre RO bzw. die Außenwand AW werden über radial angeordnete Speichen SRC gehalten. Die obere Zuleitung ZL ist oberhalb der Rohre RO an der Außenwand AW angeordnet.

In Fig. 3 ist darüber hinaus die Position der Zuführung der Kühlflüssigkeit über die dritte Zuleitung ZO3-H angedeutet. Durch das Einleiten der Kühlflüssigkeit im Mittelpunkt der in Form einer Ringspirale angeordneten Rohre RO kann das im Unterbecken UB befindliche Wasser WA abgekühlt werden, so dass sich um die Rohre RO die Eisschicht EI bilden kann. Dabei erfolgt die Vereisung radial von innen nach außen gesehen, was insbesondere die Stabilität des auf dem Unterbecken UB schwimmenden Wärmetauschers WTA erhöht. Über die Dauer der Zuleitung bzw. die Temperatur der Kühlflüssigkeit kann die Dicke der Eisschicht im Wärmetauscher WTA gesteuert werden.

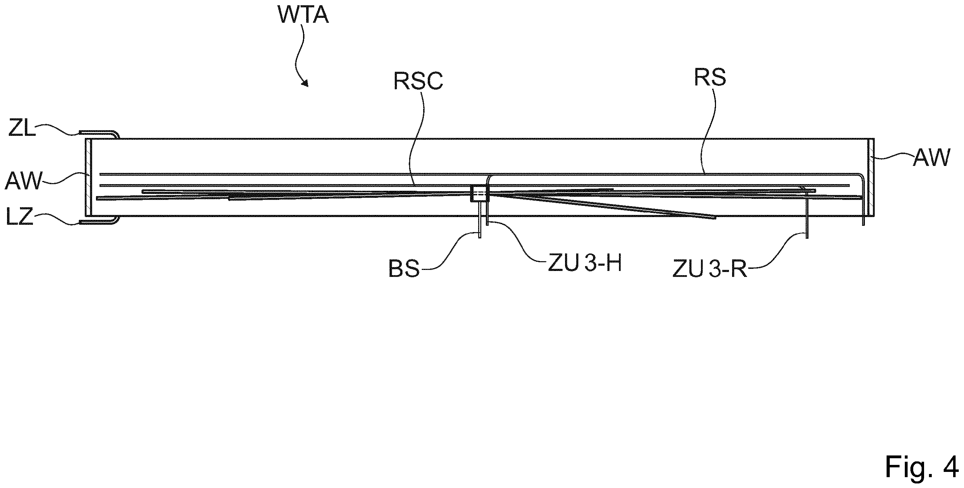

Die in Fig. 3 gezeigte Ausführungsform des Wärmetauschers WTA wird in Bezugnahme auf Fig. 4 nochmals in einer Seitenansicht dargestellt. Die Seitenansicht gemäß Fig. 4 erfolgt dabei entlang eines radialen Schnitts, der durch das Zentrum des Wärmetauschers WTA führt. Man erkennt, dass die Zuführung der dritten Zuleitung ZU3-H nahe des Zentrums des Wärmetauschers WTA angeordnet ist. Die Rückführung, d. h. die dritte Zuleitung ZU3-R befindet sich näher an der Außenwand AW.

Die obere Zuleitung ZL ist oberhalb der Ringspirale RS angeordnet. Die Außenwand AW ist dabei so ausgeführt, dass die Ringspirale RS bezüglich ihrer Höhe komplett abgedeckt ist, so dass oberhalb der Ringspirale RS und unterhalb der Ringspirale RS einzelne Teilbereiche geschaffen werden, die ebenfalls Bestandteil des Wärmetauschers WTA sind. In den unterhalb der Ringspirale RS befindlichen Teilbereich kann über eine Luftzufuhr LZ Luft in den Wärmetauscher WTA geleitet werden, was nachfolgend noch erläutert werden wird.

Um eine schwimmende Anordnung des Wärmetauschers WTA im Unterbecken UB zu ermöglichen, ist eine pfahlartige Verankerung (nicht in Fig. 4 gezeigt) vorgesehen, die mit ihrem unteren Ende an einem Grund des Unterbeckens UB befestigt ist. Entlang dieser pfahlartigen Verankerung kann, je nach Wasserstand, im Unterbecken UB, der Wärmetauscher WTA axial bewegt werden. Dies ist schematisch durch eine Befestigungsstelle BS in Fig. 4 dargestellt, die über geeignete bewegliche Verbindungsmittel mit der pfahlartigen Verankerung verbunden ist. Anstelle der pfahlartigen Verankerung oder auch zusätzlich zur pfahlartigen Verankerung kann der Wärmetauscher WTA über geeignet vorgespannte Spannseile (nicht in Fig. 4 gezeigt) mit dem Grund des Unterbeckens UB verbunden werden. Die Spannseile können auch im Bereich des Ufers des Unterbeckens UB arretiert sein.

Im Folgenden wird die Funktion des Wärmetauschers WTA anhand eines ersten Beispiels näher erläutert.

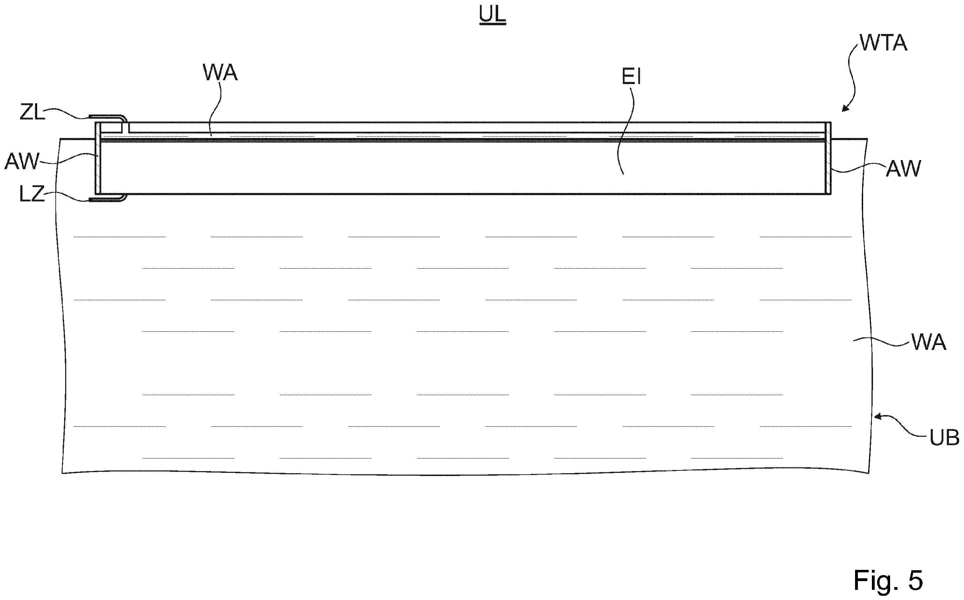

In Fig. 5 ist wiederum der Wärmetauscher WTA in dem mit Wasser WA gefüllten Unterbecken UB gezeigt. Durch Zuführen des Kühlmittels bildet sich entlang der Rohre RO die Eisschicht EI aus, die radial nach außen durch die Außenwand AW begrenzt wird. Durch Eisbildung im Unterbecken in Form der Eisschicht EI kann die latente Wärme genutzt werden und über den Wärmetauscher WTA beispielsweise zum Beheizen von Gebäuden bei einem Verbraucher wieder abgegeben werden. Um bei solarer Einstrahlung die Eisschicht EI konservieren zu können, wird über den oberen Zulauf ZL Wasser WA, vorzugsweise über den Kaltwasserrücklauf ZU2-R auf die Oberfläche der Eisschicht EI gepumpt, so dass sich das Gewicht des Wärmetauschers WTA erhöht. Folglich sinkt die Eisschicht EI unter die Wasseroberfläche des Wassers WA im Unterbecken UB und die oberhalb der Eisschicht EI angeordnete Schicht aus Wasser WA verhindert, dass solare Einstrahlung direkt auf die Eisschicht EI trifft. Demnach ist die Eisschicht EI von einer Umgebungsluft UL abgekoppelt, so dass die solare Einstrahlung über das Wasser im Unterbecken UB absorbiert wird. Dadurch erhöht sich die eingestrahlte Energiemenge, denn andernfalls würde durch das Eis größtenteils die solare Strahlung reflektiert werden.

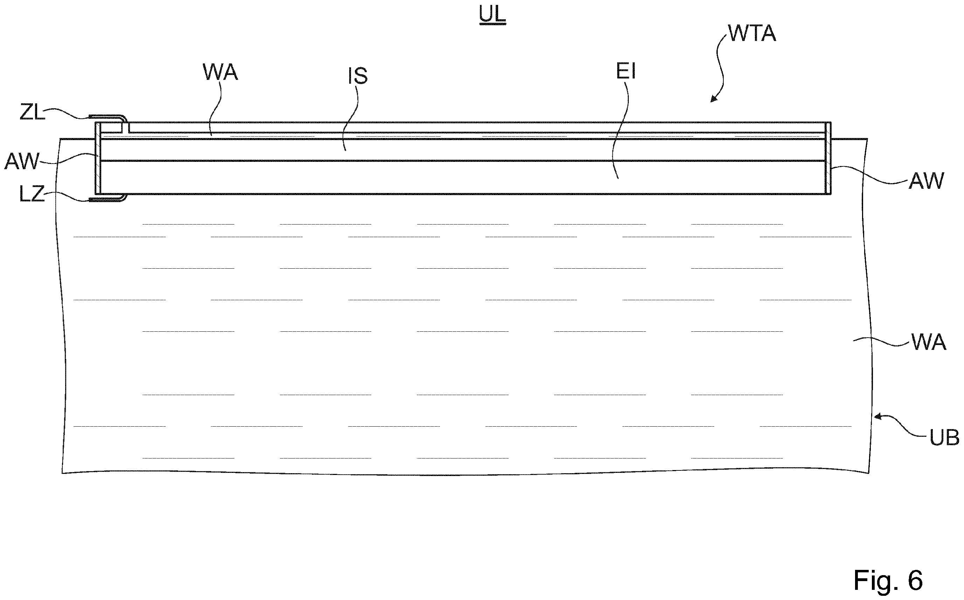

In Fig. 6 wird das in Fig. 5 vorgestellte Konzept weiter fortgeführt, in dem zwischen der Wasserschicht WA, die über den oberen Zulauf ZL in den Wärmetauscher WTA gelangt, und der Eisschicht EI eine Isolationsschicht IS angeordnet, die für eine weitere Verbesserung bezüglich der Abkopplung gegen die Umgebungsluft UL sorgt.

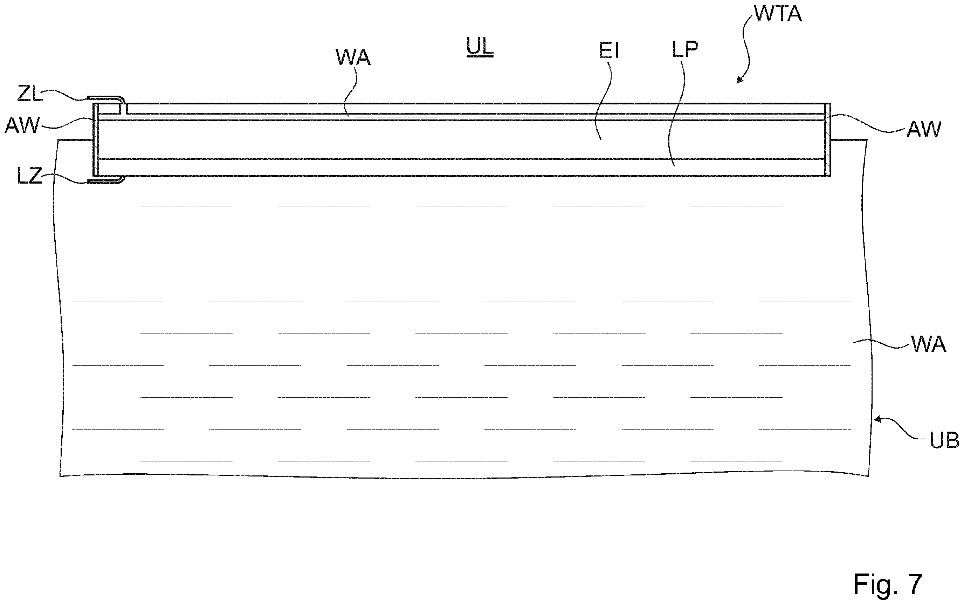

In Fig. 7 ist eine alternative Ausführungsform gezeigt, bei der insbesondere die Isolation gegen das Wasser WA im Unterbecken UB betrachtet wird. Über die Luftzufuhr LZ kann unterhalb der Eisschicht EI ein Luftpolster LT ausgebildet werden, das als Isolation gegen das Wasser WA des Unterbeckens UB wirkt.

Die im Zusammenhang mit Fig. 5 bis Fig. 7 erläuterten Ausführungsformen lassen sich jedoch auch kombinieren, so dass beispielsweise sowohl eine Isolationsschicht SI als auch ein Luftpolster LP ausgebildet werden kann. Desweiteren ist es möglich, die Rohre RO des Wärmetauschers WTA in mehreren Ebenen zu verlegen, so dass sich mehrere parallel übereinander liegende Eisschichten EI im Wärmetauscher WTA ausbilden. Die einzelnen benachbart angeordneten Eisschichten EI können über Isolationsschichten, ähnlich der Isolationsschicht IS aus Fig. 6, gegeneinander isoliert sein. Des Weiteren kann beim mehrschichtigen Aufbau jede Schicht mit einer eigenen Zuführung für das Kühlmittel versehen sein, so dass jede Schicht unabhängig von den anderen steuerbar ist. Hierbei kann insbesondere die oberste Schicht eine Schnellvereisungsstufe bilden. Dazu kann in der oberste Schicht schnell eine dünne Schicht Eis gebildet werden. Diese kann ca. bis 10 cm auf jeder Seite des Kühlrohres ausgebildet werden. Diese Schicht kann Leistungsspitzen abdecken aber auch herangezogen werden, das Unterbecken zur Atmosphäre hin zu isolieren. Die Idee ist, dass bei der Schnellvereisung z.B. über Nacht eine Eisschicht gebildet wird, um das Unterbecken gegen die Atmosphäre zu isolieren, während am Tag Wasser über das Eis gepumpt wird, um die Sonneneinstrahlung zu absorbieren und die dünne Eisschicht aufzuschmelzen. Die Schnellvereisung soll also bei positiver Energiebilanz (z.B. bei Tag) als Sonnenkollektor dienen und bei negativer Energiebilanz (z.B. kalte Nacht) als Isolation. Dadurch kann man bei Tag schnell "warmes" Wasser am Kollektor und somit eine hohe Effizienz an der Wärmepumpe erhalten. Bei Nacht wird durch die Isolation wenig Energie an die Atmosphäre verloren gehen.

Der Betrieb des Energiespeichers EN im jahreszeitlichen Zyklus erfolgt dabei so, dass während Energieeintrags durch solare Einstrahlung, d.h. in nördlichen Breiten typischerweise von Frühjahr bis Herbst, eine Temperaturspreizung erfolgt. Dadurch wird die Abstrahlungsleistung der Oberfläche des Unterbeckens UB durch Kühlung des darin befindlichen Wasser WA durch die Wärmepumpe WP reduziert. Die Temperaturspreizung zur Umgebungstemperatur der Umgebungsluft UL liegt dabei ungefähr im Bereich von 5°C bis 10°C.

Zum Ende des Herbsts, d.h. bei nachlassender Erwärmung durch solare Einstrahlung, beginnt eine Abkühlphase des Wassers WA im Unterbecken UB auf eine Temperatur von ca. 0,5°C, um eine eisbildungsfreie Übergangsphase zu ermöglichen.

In der Winterzeit erfolgt die Energieentnahme durch Vereisung an der Oberfläche des Unterbeckens UB, d.h. über die Eisschicht EI im Wärmetauscher WTA. Hierbei kann über ein genügend groß gewähltes Volumen der Eisschicht EI aufgrund des hohen Energieinhalts für die Kristallisation von Wasser WA zu Eis in der Eisschicht EI eine kontinuierliche Wärmeerzeugung über den Wärmetauscher WTA mit der Wärmepumpe WP erreicht werden.

In den Frühjahrsmonaten bis in den frühen Sommer schmilzt das Eis der Eisschicht EI am Wärmetauscher WTA bei gleichzeitig reduzierter Energieentnahme weiter ab und die Wassertemperatur des Wasser WA im Unterbecken UB erhöht sich durch solare Einstrahlung wieder.

Das vorstehend beschriebene Konzept kann somit auf vorteilhafte Weise für die Versorgung von Haushalten mit Wärmeenergie über Fernwärmeversorgung eingesetzt werden, wobei für etwa 2000 bis 4000 Haushalte etwa 40000 m³ Eis bereitgestellt werden muss, so dass ein naturnaher See als Unterbecken UB ausreichend dimensioniert ist.

Das vorhandene Eis der Eisschicht EI kann in Zeiten hoher Umgebungstemperaturen auch zum Kühlen an den Verbrauchern VR verwendet werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Energiespeicher, der einen Wärmetauscher (WTA) aufweist, der auf einem vorzugsweise über eine erste Zuleitung (ZU1) mit Wasser (WA) befüllbarem, als See ausgebildetem Unterbecken (UB) schwimmend angeordnet ist, wobei über eine zweite Zuleitung (ZU2) Wasser (WA) aus dem Unterbecken (UB) und über eine dritte Zuleitung (ZU3) den Wärmetauscher durchdringendes Kühlmittel einer Wärmepumpe (WP) in getrennten Kreisläufen zuführbar ist, so dass Energie über den Wärmetauscher (WTA) unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

2. Energiespeicher nach Anspruch 1, bei dem der Wärmetauscher durch von Kühlmittel durchströmbaren Rohren gebildet ist, wobei die Rohre vorzugsweise in Form einer Ringspirale angeordnet sind.

3. Energiespeicher nach Anspruch 2, bei dem radial angeordnete Streben die in Form der Ringspirale angeordneten Rohre tragen.

4. Energiespeicher nach einem der Ansprüche 1 bis 3, bei dem der Wärmetauscher von einer Außenwand umgeben ist, die den Wärmetauscher entlang seines Außenumfangs in Form einer vertikalen Abtrennung umgibt, so dass ein ringförmiger Körper gebildet ist.

5. Energiespeicher nach Anspruch 4, bei dem der ringförmige Körper einen Durchmesser von ungefähr 50 m bis 200 m, vorzugsweise ungefähr 100 m aufweist.

6. Energiespeicher nach einem der Ansprüche 1 bis 5, bei dem der Wärmetauscher mittels einer Verankerung mit einem Grund des Unterbeckens verbindbar ist.

7. Energiespeicher nach einem der Ansprüche 1 bis 6, bei dem sich im Wärmetauscher eine Eisschicht radial von innen nach außen und gegebenenfalls anschließend in ihrer Dicke zunehmend ausbildet.

8. Energiespeicher nach einem der Ansprüche 1 bis 7, bei dem der Wärmetauscher einen oberen Zulauf aufweist, über den Wasser bei Vereisung an dem Wärmetauscher auf die entstandene Eisschicht einbringbar ist, so dass sich die Eisschicht unterhalb der Wasseroberfläche des Unterbeckens befindet.

9. Energiespeicher nach Anspruch 8, bei dem zwischen der Eisschicht und dem zuführbaren Kaltwasser eine Isolierschicht angeordnet ist.

10. Energiespeicher nach Anspruch 8 oder 9, bei dem unterhalb der Eisschicht und auf der der Wasseroberfläche abgewandten Seite der Eisschicht ein Luftpolster ausbildbar ist.

11. Energiespeicher nach einem der Ansprüche 7 bis 10, bei dem mehrere übereinanderliegende Eisschichten ausbildbar sind, wobei dem unmittelbar benachbarte Eisschichten vorzugsweise durch Isolierschichten getrennt sind.

12. Kraftwerksanlage mit einem Energiespeicher nach einem der Ansprüche 1-11 umfassend ein mit Wasser befüllbares Unterbecken eines Pumpspeicherkraftwerks, wobei das Unterbecken über eine erste Zuleitung mit einer Pumpe und über eine durch das Pumpspeicherkraftwerk hindurchführende und mit der ersten Zuleitung verbindbaren Leitung mit einem oberen Reservoir verbunden ist, wobei das Unterbecken Teil eines Energiespeichers nach einem der Ansprüche 1 bis 11 versehen ist.

13. Kraftwerksanlage nach Anspruch 12, bei der das obere Reservoir Teil einer Windkraftanlage ist, wobei die Pumpe mittels von der Windkraftanlage erzeugten elektrischen Energie antreibbar ist, um Wasser aus dem Unterbecken in das obere Reservoir zu pumpen.

14. Verfahren zum Betrieb eines Energiespeichers nach einem der Ansprüche 1 bis 11, bei dem die Wärmepumpe in Abhängigkeit der Umgebungstemperatur, der Sonneneinstrahlung und der Wassertemperatur so gesteuert wird, dass die Eisschicht am Wärmetauscher dann gebildet wird, wenn aus der Wassertemperatur des Unterbeckens keine Energie gewinnbar ist, wobei vorzugsweise darüber hinaus ein Absenken der Eisschicht durch Wasserlast durchführbar ist.

15. Verfahren nach Anspruch 14, bei dem der Energiespeicher einen mehrschichtigen Aufbau aufweist, wobei die der Wasseroberfläche nächstliegende Schicht zuerst zur Bildung einer vorzugsweise dünnen Eisschicht herangezogen wird.

## Claims

1. An energy store comprising a heat exchanger (WTA) and disposed floating on a lower basin (UB) implemented as a lake and preferably able to be filled with water (WA) by means of a first infeed line (ZU1), wherein water (WA) from the lower basin (UB) can be fed to a heat pump via a second infeed line (ZU2) and coolant permeating the heat exchanger can be fed to a heat pump separately via a third infeed line (ZU3), so that energy can be removed from the water of the lower basin via the heat exchanger (WTA) by freezing the water of the lower basin, or in the form of perceptible heat, and can be fed onward to a consumer for dissipating heat and/or for dissipating cold.

2. The energy store according to claim 1, the heat exchanger being formed by tubes through which coolant can flow, wherein the tubes are preferably disposed in the form of annular spiral.

3. The energy store according to claim 2, wherein radially disposed struts support the tubes arranged in the form of the annular spiral.

4. The energy store according to any one of the claims 1 through 3, wherein the heat exchanger is enclosed by an outer wall enclosing the heat exchanger along the outer periphery thereof in the form of a vertical separator, so that an annular body is formed.

5. The energy store according to claim 4, wherein the annular body has a diameter of approximately 50 m to 200 m, preferably approximately 100 m.

6. The energy store according to any one of the claims 1 through 5, wherein the heat exchanger can be connected to a floor of the lower basin by means of an anchor.

7. The energy store according to any one of the claims 1 through 6, wherein an ice layer forms radially from the interior outward and optionally then increases in thickness.

8. The energy store according to any one of the claims 1 through 7, wherein the heat exchanger comprises a top inlet through which water can be applied to the resulting ice layer when the heat exchanger is iced over, so that the ice layer is present below the surface of the water of the lower basin.

9. The energy store according to claim 8, wherein an insulating layer is disposed between the ice layer and the infed cold water.

10. The energy store according to claim 8 or 9, wherein an air cushion can be formed below the ice layer and on the side of the ice layer facing away from the surface of the water.

11. The energy store according to any one of the claims 7 through 10, wherein a plurality of ice layers lying upon each other can be formed, wherein immediately adjacent ice layers are preferably separated by insulating layers.

12. A power plant having an energy store according to any one of the claims 1 through 11, comprising a lower basin of a pump storage power plant for filling with water, the lower basin being connected to an upper reservoir by means of a first infeed line having a pump and by means of a line passing through the pump storage power plant and being connectable to the first infeed line, wherein the lower basin is part of an energy store according to any one of the claims 1 through 11.

13. A power plant according to claim 12, wherein the upper reservoir is part of a wind power plant, wherein the pump can be driven by means of electrical energy produced by the wind power plant, in order to pump water out of the lower basin into the upper reservoir.

14. A method for operating an energy store according to any one of the claims 1 through 11, wherein the heat pump is controlled depending on the ambient temperature, the impinging sunlight, and the water temperature, so that the ice layer forms on the heat exchanger whenever no energy can be obtained from the water temperature of the lower basin, wherein furthermore a lowering of the ice layer due to the water load can be preferably implemented.

15. The method according to claim 14, wherein the energy store comprises a multi-layered structure, wherein the layer nearest to the surface of the water is used first for forming a preferably thin ice layer.

## Revendications

1. Accumulateur d'énergie, lequel comporte un échangeur de chaleur (WTA), lequel est disposé de manière flottante sur un bassin inférieur (UB) pouvant être rempli d'eau (WA) de préférence via une première canalisation d'alimentation (ZU1) et se présentant sous la forme d'un lac, dans lequel via une seconde canalisation d'alimentation (ZU2), l'eau (WA) est acheminée depuis le bassin inférieur (UB) et via une troisième canalisation d'alimentation (ZU3) à un réfrigérant d'une pompe à chaleur (WP) traversant l'échangeur de chaleur dans des circuits séparés, de sorte que l'énergie, via l'échangeur de chaleur (WTA), soit extractible par givrage de l'eau du bassin inférieur ou sous forme de chaleur sensible provenant de l'eau du bassin inférieur et transmissible à un consommateur en vue de la délivrance de chaleur et/ou de froid.

2. Accumulateur d'énergie selon la revendication 1, dans lequel l'échangeur de chaleur est formé par des tubes parcourus par le réfrigérant, sachant que les tubes sont disposés de préférence sous la forme d'une spirale annulaire.

3. Accumulateur d'énergie selon la revendication 2, dans lequel des croisillons disposés radialement portent les tubes disposés sous la forme d'une spirale annulaire.

4. Accumulateur d'énergie selon l'une des revendications 1 à 3, dans lequel l'échangeur de chaleur est entouré d'une paroi extérieure, qui entoure l'échangeur de chaleur le long de sa circonférence extérieure sous la forme d'une cloison verticale, de sorte qu'il se forme un corps annulaire.

5. Accumulateur d'énergie selon la revendication 4, dans lequel le corps annulaire présente un diamètre de 50 m à 200 m environ, de préférence de 100 m environ.

6. Accumulateur d'énergie selon l'une des revendications 1 à 5, dans lequel l'échangeur de chaleur peut être relié avec le fond du bassin inférieur au moyen d'une ancre.

7. Accumulateur d'énergie selon l'une des revendications 1 à 6, dans lequel, dans l'échangeur de chaleur, une couche de glace se forme radialement de l'intérieur vers l'extérieur et ensuite, le cas échéant, avec une épaisseur croissante.

8. Accumulateur d'énergie selon l'une des revendications 1 à 7, dans lequel l'échangeur de chaleur comporte une arrivée supérieure, par laquelle l'eau peut acheminée sur la couche de glace produite en cas de givrage à l'échangeur de chaleur, de sorte que la couche de glace se retrouve sous la surface de l'eau du bassin inférieur.

9. Accumulateur d'énergie selon la revendication 8, dans lequel une couche d'isolation est disposée entre la couche de glace et l'eau froide pouvant être fournie.

10. Accumulateur d'énergie selon la revendication 8 ou 9, dans lequel un matelas d'air isolant peut être formé sous la couche de glace et sur la face de la couche de glace éloignée de la surface d'eau.

11. Accumulateur d'énergie selon l'une des revendications 7 à 10, dans lequel peuvent être formées plusieurs couches de glace superposées, sachant que des couches de glace immédiatement adjacentes sont séparées de préférence par des couches d'isolation.

12. Installation de centrale électrique avec un accumulateur d'énergie selon l'une des revendications 1-11, comprenant un bassin inférieur pouvant être rempli d'eau d'une centrale de pompage, sachant que le bassin inférieur est relié avec une pompe via une première canalisation d'alimentation et avec un réservoir supérieur via une canalisation traversant la centrale de pompage et pouvant être reliée avec la première canalisation d'alimentation, sachant que le bassin inférieur fait partie d'un accumulateur d'énergie selon l'une des revendications 1 à 11.

13. Installation de centrale électrique selon la revendication 12, dans laquelle le réservoir supérieur fait partie d'une centrale éolienne, sachant que la pompe peut être entraînée à l'aide d'énergie électrique générée par la centrale éolienne afin de pomper l'eau du bassin inférieur dans le réservoir supérieur.

14. Procédé pour exploiter un accumulateur d'énergie selon l'une des revendications 1 à 11, dans lequel la pompe à chaleur est commandée en fonction de la température ambiante, du rayonnement solaire et de la température de l'eau de manière à ce que la couche de glace sur l'échangeur de chaleur se forme lorsque l'énergie ne peut pas être gagnée de la température d'eau du bassin inférieur, sachant que, de préférence, un abaissement de la couche de glace sous la charge de l'eau peut être effectué.

15. Procédé selon la revendication 14, dans lequel l'accumulateur d'énergie présente une structure à plusieurs couches, sachant que la couche la plus proche de la surface d'eau est la première à être utilisée pour former une couche de glace de préférence mince.
